(19) Europäisches Patentamt
European Patent Office
Office européen des brevets

(11) **EP 3 664 243 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **18210099.0**

(22) Anmeldetag: **04.12.2018**

(51) Internationale Patentklassifikation (IPC):
***H02J 3/06*** *(2006.01)*

(52) Gemeinsame Patentklassifikation (CPC):
**H02J 3/06; G06F 30/36;** G06F 2113/04;
G06F 2119/06; G06Q 50/06; H02J 3/003;
Y02B 70/3225; Y02B 90/20; Y02E 60/00;
Y04S 10/50; Y04S 20/00; Y04S 20/222; Y04S 40/20

(54) **PRÄDIKTIVE BETRIEBSPLANUNG IN EINEM MIKRONETZ UNTER BERÜCKSICHTIGUNG VON HOCHLASTZEITFENSTERN EINES HAUPTSTROMNETZES**

PREDICTIVE PLANNING IN A MICRONETWORK USING HIGH LOAD TIME WINDOWS OF A MAIN POWER NETWORK

PLANIFICATION DE FONCTIONNEMENT PRÉDICTIVE DANS UN MICRO-RÉSEAU EN FONCTION DES FENÊTRES TEMPORELLES DE CHARGE ÉLEVÉ D'UN RÉSEAU ÉLECTRIQUE PRINCIPAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.06.2020 Patentblatt 2020/24**

(73) Patentinhaber: **Siemens Aktiengesellschaft**
**80333 München (DE)**

(72) Erfinder: **Seydenschwanz, Martin**
**81541 München (DE)**

(56) Entgegenhaltungen:
- **RAFIEE SANDGANI MOHSEN ET AL: "Energy Management in a Network of Grid-Connected Microgrids/Nanogrids Using Compromise Programming", IEEE TRANSACTIONS ON SMART GRID, Bd. 9, Nr. 3, 1. Mai 2018 (2018-05-01), Seiten 2180-2191, XP011681255, IEEE, USA ISSN: 1949-3053, DOI: 10.1109/TSG.2016.2608281 [gefunden am 2018-04-18]**
- **GAZIJAHANI FARHAD SAMADI ET AL: "Reliability constrained two-stage optimization of multiple renewable-based microgrids incorporating critical energy peak pricing demand response program using robust optimization approach", ENERGY, Bd. 161, 1. August 2018 (2018-08-01), Seiten 999-1015, XP085472796, ELSEVIER, AMSTERDAM, NL ISSN: 0360-5442, DOI: 10.1016/J.ENERGY.2018.07.191**
- **G. G. MOSHI; C. BOVO; A. BERIZZI: "Optimal Operational Planning for PV-Wind-Diesel-Battery Microgrid", IEEE EINDHOVEN POWERTECH, 2015, XP033215532, DOI: 10.1109/PTC.2015.7232461**

**Beschreibung**

TECHNISCHES GEBIET

Verschiedene Beispiele der Erfindung betreffen im Allgemeinen die prädiktive Betriebsplanung in einem Mikrostromnetz (nachfolgend einfach Mikronetz), wobei das Mikronetz einen Anschluss an ein Hauptstromnetz aufweist. Verschiedene Beispiele der Erfindung betreffen insbesondere die prädiktive Betriebsplanung, so dass diese eine Leistungsentnahme des Mikronetzes aus dem Hauptstromnetz in mindestens einem Hochlastzeitfenster des Hauptstromnetzes berücksichtigt.

HINTERGRUND

Die dezentrale Stromerzeugung in Mikronetzen - z.B. für die autarke Energieversorgung von Industrieanlagen oder Inseln - beispielsweise mit einer Kombination aus konventionellen Erzeugern und regenerativen Energiequellen wird weit verbreitet eingesetzt. In vielen Fällen umfasst ein Mikronetz auch einen Anschluss zu einem Hauptstromnetz. Dadurch kann der Betrieb des Mikronetzes flexibilisiert und zudem besser gegen Ausfall geschützt werden.

Mikronetze beschreiben im Allgemeinen eine lokalisierte Gruppe von Stromquellen und Stromverbrauchern. Mikronetze können konventionelle Stromquellen und regenerative Stromquellen umfassen. Das Mikronetz weist im Vergleich zu Hauptstromnetzen typischerweise eine limitierte Ausdehnung auf. Typische Verbraucher in einem Mikronetz sind z.B.: Wohnhäuser; Autobatterien; Industrieanlagen; Maschinen; etc. Typische Stromquellen sind z.B.: Photovoltaikanlagen; Dieselgeneratoren; Windkraftanlagen; etc. Ein Mikronetz kann z.B. in einem Wohnblock, einer Wohngemeinschaft, einer Militärbasis, einer Forschungsstation oder ähnlichem eingesetzt werden. Mikronetze können beispielsweise zur autarken Energieversorgung von Industrieanlagen oder Inseln eingesetzt werden.

Ein Mikronetz kann über einen Anschluss mit einem Hauptstromnetz verbunden sein. Durch das Vorsehen eines Anschlusses des Mikronetzes zum Hauptstromnetz kann ein besonders flexibler Betrieb des Mikronetzes ermöglicht werden. Außerdem kann ein Schutz vor Ausfall durch Zurückgreifen auf die Stromversorgung durch das Hauptstromnetz ermöglicht werden. Der Betrieb des Hauptstromnetzes kann stabilisiert und unterstützt werden.

Der Betrieb des Hauptstromnetzes kann durch das Mikronetz zum Beispiel durch Berücksichtigung von s.g. Hochlastzeitfenstern (HLZs) unterstützt werden. Dabei kann beispielsweise eine Reduktion der Leistungsentnahme des Mikronetzes aus dem Hauptstromnetz in den HLZs erfolgen. Ein solches Verhalten wird als atypische Netznutzung bezeichnet.

Durch Berücksichtigung von HLZs des Hauptstromnetzes beim Betrieb des Mikronetzes können im Hauptstromnetz Spitzen im Verbrauch bzw. in der Erzeugung abgefedert werden. Der Betrieb des Hauptstromnetzes kann dadurch unterstützt werden. Eine Überlastung wird vermieden.

Das Dokument von RAFIEE SANDGANI MOHSEN ET AL: "Energy Management in a Network of Grid-Connected Microgrids/Nanogrids Using Compromise Programming", IEEE TRANSACTIONS ON SMART GRID, Bd. 9, Nr. 3, 1. Mai 2018 (2018-05-01), Seiten 2180-2191, beschreibt ein Netzwerk aus netzgekoppelten Mikronetzen, wobei die Mikronetze mit dem Hauptstromnetz und mit anderen Mikronetzen Leistung austauschen können. Zur Optimierung des Energiemanagements des Mikronetzes werden die Abstände des Mikronetz-Kostenvektors minimiert. Bei der Minimierung des Mikronetz-Kostenvektors wird durch den Term $c_i^{pk} P_i^{pk}$ Peak Shaving berücksichtigt.

Das Dokument von GAZIJAHANI FARHAD SAMADI ET AL: "Reliability constrained two-stage optimization of multiple renewable-based microgrids incorporating critical energy peak pricing demand response program using robust optimization approach", ENERGY, Bd. 161, 1. August 2018 (2018-08-01), Seiten 999-1015, beschreibt ein Nachfrage-Antwort-Programm zur Optimierung von Mikronetzen. Das Shaving von kritischen Preisspitzen führt zur Glättung des Lastprofils und zur Reduzierung der Investitionskosten. Je nach Jahreszeit werden die Fenster, in denen die kritischen Preisspitzen geglättet werden, angepasst. Dieses Dokument zeigt lediglich eine Anpassung/Parametrisierung des Fensters für das Peak Shaving auf Grund von historischen Daten.

KURZE BESCHREIBUNG DER ERFINDUNG

Es besteht ein Bedarf, um Techniken im Zusammenhang mit HLZs eines Hauptstromnetzes in eine prädiktive Betriebsplanung des Mikronetzes mit Anschluss zum Hauptstromnetz zu integrieren. Diese Aufgabe wird gelöst von den Merkmalen der unabhängigen Patentansprüche. Die Merkmale der abhängigen Patentansprüche definieren Ausführungsformen.

Ein Verfahren zur prädiktiven Betriebsplanung in einem Mikronetz, welches einen Anschluss an ein Hauptstromnetz aufweist, wobei der Betrieb des Hauptstromnetzes durch das Mikronetz durch Berücksichtigung von Hochlastzeitfenstern unterstützt wird, und wobei eine Reduktion der Leistungsentnahme des Mikronetzes aus dem Hauptstromnetz in den Hochlastzeitfenstern erfolgt, umfasst: Durchführen einer Optimierung einer Zielfunktion für ein Planungsintervall. Die Zielfunktion berücksichtigt dabei eine Leistungsentnahme des Mikronetzes aus dem Hauptstromnetz in mindestens einem solchen HLZ des Hauptstromnetzes, wobei die mehreren Hochlastzeitfenster im Planungsintervall und in einem historischen Intervall, das mindestens um einen Faktor 10 länger ist als das Planungsintervall, angeordnet sind, und

wobei die Zielfunktion eine weitere Leistungsentnahme des Mikronetzes aus dem Hauptstromnetz außerhalb der mehreren Hochlastzeitfenster im historischen Intervall und im Planungsintervall berücksichtigt. Außerdem umfasst das Verfahren das Durchführen der Betriebsplanung basierend auf dem Ergebnis der Optimierung.

Ein Gerät umfasst einen Prozessor, der dazu eingerichtet ist, um das oben genannte Verfahren auszuführen.

Ein Computerprogramm oder ein Computerprogramm-Produkt oder ein computerlesbares Speichermedium umfasst Programmcode. Der Programmcode kann von einem Prozessor geladen und ausgeführt werden. Wenn der Prozessor den Programmcode ausführt, bewirkt dies, dass der Prozessor folgende Schritte ausführt: Durchführen einer Optimierung einer Zielfunktion für ein Planungsintervall. Die Zielfunktion berücksichtigt eine Leistungsentnahme eines Mikronetzes aus einem Hauptstromnetz in mindestens einem HLZ des Hauptstromnetzes. Und Durchführen einer Betriebsplanung des Mikronetzes basierend auf einem Ergebnis der Optimierung.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

Fig. 1    illustriert schematisch ein Mikronetz mit einem Anschluss an ein Hauptstromnetz gemäß verschiedenen Beispielen.

Fig. 2    illustriert schematisch ein Gerät, welches zur Betriebsplanung des Mikronetzes eingerichtet ist.

Fig. 3    ist ein Flussdiagram eines beispielhaften Verfahrens.

Fig. 4    illustriert schematisch den Zeitverlauf einer Leistungsentnahme des Mikronetzes aus dem Hauptstromnetz sowie HLZs gemäß verschiedener Beispiele.

Fig. 5    illustriert schematisch eine Leistungsentnahme des Mikronetzes aus dem Hauptstromnetz gemäß einer Betriebsplanung basierend auf einer Optimierung unter Berücksichtigung von HLZs gemäß verschiedener Beispiele.

DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken im Zusammenhang mit der prädiktiven Betriebsplanung in einem Mikronetz beschrieben. Das bedeutet, dass ein oder mehrere Knoten eines Mikronetzes gemäß einem entsprechenden Betriebsplan gesteuert werden können. Z.B. könnte der Verbrauch, die abgegebene Leistung, die Betriebsfrequenz usw. entsprechend gesteuert werden. Der Betriebsplan könnte alternativ oder zusätzlich auch eine Architektur des Mikronetzes bestimmen, d.h. z.B. eine Verschaltung von Knoten etc. Der Betriebsplan kann ein oder mehrere solche Parameter zeitaufgelöst für ein Planungsintervall festlegen.

Das Mikronetz kann eine Vielzahl von Stromverbrauchern und Stromquellen aufweisen. Beispielsweise könnte das Mikronetz ein oder mehrere der folgenden Knoten aufweisen: Photovoltaikanlage; Batterie-Energiespeichers; Dieselgenerator; Windkraftanlage; elektrisches Gerät wie Maschinen, Heizungen, etc. Das Mikronetz kann insbesondere einen Anschluss zu einem Hauptstromnetz aufweisen. Der Betreiber des Mikronetzes kann verschieden sein von dem Betreiber des Hauptstromnetzes. Für das Betreiben des Mikronetzes und das Betreiben des Hauptstromnetzes können unterschiedliche Planungsinstanzen verwendet werden. Es können unterschiedliche Betriebspläne verwendet werden.

In verschiedenen hierin beschriebenen Techniken kann es möglich sein, eine Betriebsplanung für das Mikronetz basierend auf einem Ergebnis einer Optimierung durchzuführen. Dabei kann die Betriebsplanung einen Leistungsaustausch zwischen dem Mikronetz und dem Hauptstromnetz vorsehen.

Z.B. kann das Durchführen der Betriebsplanung umfassen: Senden und/oder Empfangen von Steuersignalen an und/oder von ein oder mehreren Knoten des Mikronetzes, wobei die Steuersignale den elektrischen Betrieb der Knoten charakterisieren. Z.B. könnte mittels der Steuersignale eine Leistungsentnahme und/oder eine Leistungsabgabe der verschiedenen Knoten gesteuert werden.

In verschiedenen Beispielen wäre es möglich, dass die Optimierung zeitdiskret durchgeführt wird, d.h. unter Berücksichtigung von einer Anzahl von diskreten Zeitintervallen. Typische Zeitintervalle, die im Rahmen der Optimierung berücksichtigt werden können, können beispielsweise eine Dauer im Bereich von einigen 10 Sekunden bis Minuten aufweisen.

Es ist z.B. möglich, dass die Optimierung prospektiv für das Planungsintervall, beginnend in der Ist-Zeit, durchgeführt wird. Insbesondere wäre es möglich, dass die Optimierung rollierend durchgeführt wird. Dies bedeutet, dass ein Schiebefensteransatz (engl. sliding window) verwendet werden kann, bei welchem die Optimierung in mehreren Iterationen nacheinander wiederholt durchgeführt wird, wobei das jeweilige Planungsintervall zum jeweiligen Ist-Zeitpunkt startet und somit von Iteration zu Iteration in der Zeit nach vorne verschoben wird. Das Planungsintervall kann z.B. eine Anzahl der Zeitintervalle umfassen, beispielsweise 1.000 oder 10.000 oder mehr Zeitintervalle. Typischerweise kann das Planungsintervall eine Länge im Bereich von Stunden oder Tagen aufweisen.

In manchen Beispielen könnte z.B. eine gemischt-ganzzahlige lineare Optimierung (engl. Mixed Integer Linear Programming optimization, MILP optimization) durchgeführt werden. In anderen Beispielen könnte aber auch eine gemischt-ganzzahlige quadratische Optimierung durchgeführt werden oder eine andere Art der Optimierung. Durch das Verwenden einer ganzzahligen Optimierung kann erreicht werden, dass die Optimierung besonders ressourceneffizient und zügig durchgeführt werden kann. Außerdem können z.B. binäre Zustandsvariablen definiert werden, die z.B. den Wert 1 oder den Wert 0 annehmen, je nachdem, ob ein bestimmtes Kriterium erfüllt oder nicht erfüllt ist.

Durch das Verwenden einer linearen Optimierung kann wiederum eine besonders recheneffiziente und wenig ressourcenintensive Implementierung der Optimierung verwendet werden. Außerdem kann es möglich sein, das Auffinden eines globalen Maximums oder eines globalen Minimums einer Zielfunktion der Optimierung - unter Berücksichtigung von ein oder mehreren Randbedingungen - zu garantieren. Entsprechende Lösungsansätze für gemischt-ganzzahlige lineare Optimierungen sind im Grundsatz dem Fachmann bekannt und können hier verwendet werden. Ein entsprechendes Beispiel ist z.B. beschrieben in: "Optimal Operational Planning for PV-Wind-Diesel-Battery Microgrid, G. G. Moshi, C. Bovo, and A. Berizzi, IEEE Eindhoven PowerTech, 2015".

In den verschiedenen Beispielen wird im Zusammenhang mit dem Durchführen der Optimierung eine Leistungsentnahme zwischen dem Mikronetz und dem Hauptstromnetz über einen entsprechenden Anschluss berücksichtigt. Der Leistungsaustausch kann bedeuten, dass in ein oder mehreren entsprechenden Zeitintervallen elektrische Energie vom Hauptstromnetz an das Mikronetz transferiert wird (Leistungsentnahme) und/oder in ein oder mehreren weiteren Zeitintervallen elektrische Leistung vom Mikronetz an das Hauptstromnetz transferiert wird (Leistungsabgabe). Durch die Berücksichtigung eines Leistungsaustausches kann der Betrieb des Hauptstromnetzes und der Betrieb des Mikronetzes stabilisiert werden. Insbesondere können Verbrauchsspitzen oder Produktionsspitzen im Mikronetz und/oder im Hauptstromnetz abgefedert werden. Dadurch kann insbesondere die Fehlfunktion von einzelnen Knoten in den Netzen vermieden werden.

In verschiedenen Beispielen wird insbesondere eine Leistungsentnahme des Mikronetzes aus dem Hauptstromnetz in mindestens einem HLZ des Hauptstromnetzes berücksichtigt. Ein HLZ kann z.B. gemäß einem Betriebsplan des Hauptstromnetzes vorgegeben sein. In HLZs liegt typischerweise ein besonders hoher Leistungsverbrauch von Lasten, die durch das Hauptstromnetz versorgt werden, vor. Z.B. kann die mittlere verbrauchte Leistung in einem HLZ um einen bestimmten Faktor größer sein, als die mittlere verbrauchte Leistung außerhalb von HLZs; beispielsweise kann der Faktor im Bereich von 1,2-3,0 liegen. Beispielsweise werde es möglich, dass zu Beginn eines jeweiligen Betriebszeitraums - etwa jeweils zu Beginn eines Jahres - der Betreiber des Hauptstromnetzes ein oder mehrere HLZ bekannt gibt. Die ein oder mehreren HLZ können z.B. basierend auf historischen Lastverläufen bestimmt werden.

In verschiedenen Beispielen ist es möglich, im Zusammenhang mit der Optimierung zu berücksichtigen, ob sich der Betrieb des Mikronetzes für eine s.g. atypische Netznutzung qualifiziert. Damit sich ein Verbraucher des Hauptstromnetzes - wie beispielsweise auch das Mikronetz, welches über einen Anschluss mit dem Hauptstromnetz verbunden ist und eine Leistungsentnahme durchführt - für die atypische Netznutzung qualifiziert, können ein oder mehrere Kriterien im Zusammenhang mit der Leistungsentnahme aus dem Hauptstromnetz in den ein oder mehreren HLZs berücksichtigt werden (Qualifikationskriterien).

Ein beispielhaftes Qualifikationskriterium betrifft die maximale Leistungsentnahme (Spitzenlastentnahme) während der HLZ relativ in Bezug auf die Spitzenlastentnahme im gesamten Betriebszeitraum, jedoch außerhalb der HLZs. Z.B. kann gefordert werden, dass das Verhältnis zwischen der Spitzenlastentnahme innerhalb der HLZs und der Spitzenlastentnahme außerhalb der HLZs im Betriebszeitraum kleiner als ein bestimmter vorgegebener Schwellenwert ist (Erheblichkeitsschwelle). Dabei sollte aber verstanden werden, dass dieses Kriterium der Verhältnisse der Spitzenlastentnahmen lediglich ein Beispiel ist. Es sind im Allgemeinen auch andere Kriterien denkbar. Z.B. könnte eine mittlere Leistungsentnahme des Mikronetzes aus dem Hauptstromnetz in den HLZs im Verhältnis zu einer mittleren Leistungsentnahme des Mikronetzes aus dem Hauptstromnetz außerhalb der HLZs im Betriebszeitraum berücksichtigt werden.

Im Allgemeinen kann für die Qualifikation der atypischen Netznutzung berücksichtigt werden, dass der Verbraucher atypisch handelt, da er in Zeiten, in denen typischerweise ein allgemein hoher Strombedarf besteht, seinen eigenen Bedarf reduziert. Eine entsprechende Erheblichkeitsschwelle kann z.B. im Bereich von 5-30 % liegen.

Durch die Berücksichtigung von atypischer Netznutzung können beispielsweise die im Mikronetz zur Verfügung stehenden Ressourcen effizienter genutzt werden. Nachfolgend werden Techniken beschrieben, die es ermöglichen, atypische Netznutzung in die prädiktive Betriebsplanung im Zusammenhang mit einer Optimierung, beispielsweise einer gemischt-ganzzahligen linearen Optimierung, zu integrieren.

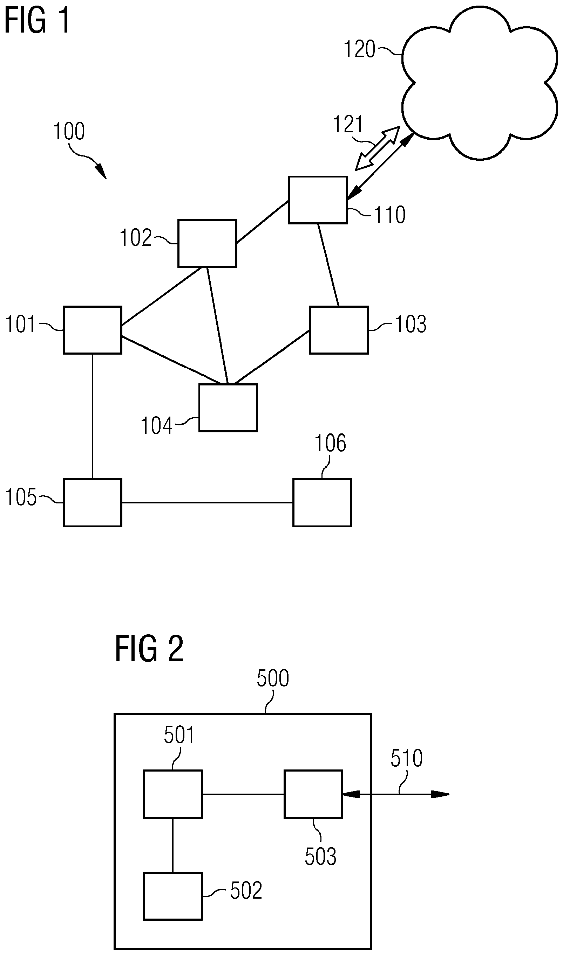

Fig. 1 illustriert schematisch ein Mikronetz 100 mit einer Anzahl an Knoten 101-106. Die Knoten 101-106 sind durch Leitungen verbunden, wobei die Anordnung der Knoten im Mikronetz 100 eine Architektur des Mikronetzes 100 bestimmen. Außerdem weist das Mikronetz 100 auch noch einen weiteren Knoten 110 auf, der einen Anschluss des Mikronetzes 100 zu einem Hauptstromnetz 120 modelliert. Über den Anschluss 110 kann ein Leistungsaustausch 121 zwischen dem Mikronetz 100 und dem Hauptstromnetz 120 implementiert, d.h. ein elektrischer Energiefluss kann realisiert werden.

Im Rahmen des Durchführens einer Betriebsplanung des Mikronetzes 100 kann der individuelle Betrieb der verschiedenen Knoten 101-106 gesteuert werden. Alternativ oder zusätzlich könnte aber auch die Architektur des Mikronetzes 100 konfiguriert werden.

Fig. 2 illustriert schematisch ein Gerät 500, welches eingesetzt werden kann, um eine Betriebsplanung für den Betrieb eines Mikronetzes - beispielsweise des Mikronetzes 100 aus Fig. 1 - durchzuführen. Das Gerät 500 umfasst einen Prozessor 501. Z.B. könnte der Prozessor als FPGA oder ASIC oder Mikroprozessor oder CPU implementiert sein. Das Gerät 500 umfasst auch einen Speicher 502 beispielsweise einen nicht flüchtigen und/oder einen flüchtigen Speicher. Z.B. könnte der Speicher 502 als RAM Speicher ausgebildet sein. Alternativ oder zusätzlich könnte der Speicher 502 als magnetische Festplatte oder Flash-Speicher ausgebildet sein. Insbesondere kann es möglich sein, dass Programmcode auf dem Speicher 502 gespeichert ist und von dem Prozessor 501 geladen und ausgeführt wird. Der Prozessor 501 kann auch über eine Kommunikationsschnittstelle 503 Steuersignale 510 mit einer oder mehreren der Knoten 101-106, 110 des Mikronetzes 100 austauschen. Dadurch kann der Betrieb der Knoten 101-106, 110 gesteuert werden. Es wäre z.B. auch möglich, dass eine flexible Verschaltung der Verbindungen und Leitungen zwischen den verschiedenen Knoten 101-106, 110 des Mikronetzes 100 über entsprechende Steuersignale 510 gesteuert wird.

Wenn der Prozessor 501 den vom Speicher 502 geladenen Programmcode ausführt, kann dies bewirken, dass der Prozessor 501 bestimmte Techniken, wie sie nachfolgend im Detail beschrieben werden, ausführt. Diese Techniken können z.B. umfassen: Durchführen einer Betriebsplanung für ein Mikronetz; Durchführen einer Optimierung, insbesondere einer ganzzahligen linearen Optimierung, unter Berücksichtigung von ein oder mehreren Randbedingungen; Setzen der Zielfunktion und/oder der ein oder mehreren Randbedingung der Optimierung unter Berücksichtigung einer Leistungsentnahme (z.B. einer Spitzenlastentnahme) des Mikronetzes aus einem Hauptstromnetz in einem oder mehreren HLZs; etc.

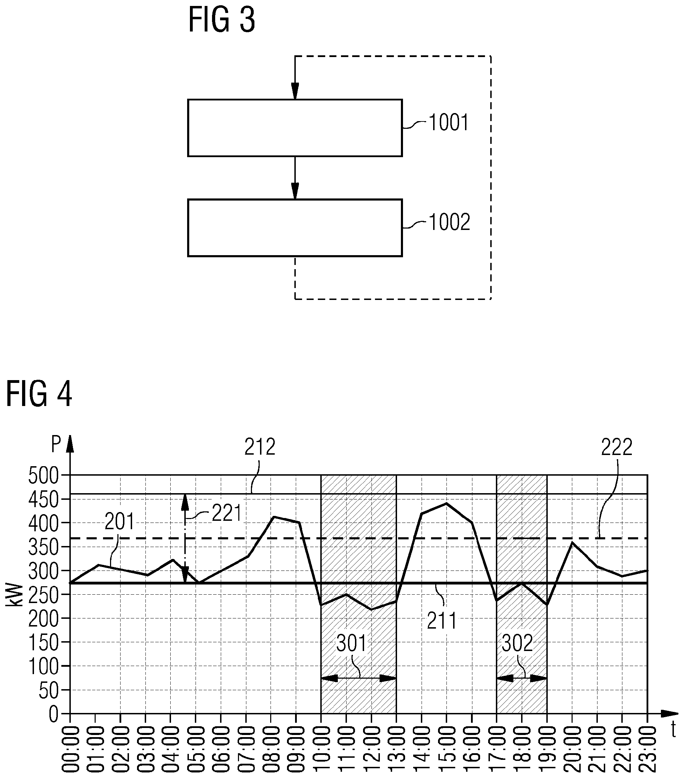

Z.B. ist ein mögliches Verfahren, welches vom Prozessor 501 durch Laden des Programmcodes aus dem Speicher 502 ausgeführt werden kann, im Zusammenhang mit dem Flussdiagram in Fig. 3 beschrieben.

Fig. 3 illustriert schematisch ein Verfahren gemäß verschiedenen Beispielen. Fig. 3 ist ein Flussdiagramm. Z.B. könnte das Verfahren in Fig. 3 von einem Gerät ausgeführt werden, welches einen Prozessor und einen Speicher mit entsprechenden Programmcode beinhaltet (vgl. Gerät 500 aus Fig. 2). Das Verfahren gemäß Fig. 3 dient der Betriebsplanung eines Mikronetzes, etwa des Mikronetzes 100 aus Fig. 1.

Zunächst wird in Block 1001 eine zeitdiskrete Optimierung einer Zielfunktion für ein Planungsintervall durchgeführt. Insbesondere kann sich das Planungsintervall ausgehend von der Ist-Zeit in die Zukunft erstrecken. Dies bedeutet, dass eine prädiktive Betriebsplanung im Block 1002 ermöglicht wird, weil bestimmte Steuerparameter der verschiedenen Knoten des Mikronetzes 100 bzw. des Mikronetzes 100 selbst auf Grundlage eines Ergebnisses der Optimierung aus Block 1001 gesteuert werden können und so prädiktive vorhergesagt werden kann, wie sich der Betrieb des Mikronetzes über der Zeit verändert.

In Block 1002 wird die Betriebsplanung durchgeführt. Dabei wird das Ergebnis der Optimierung aus Block 1001 berücksichtigt. Die Betriebsplanung kann z.B. das Bestimmen eines Betriebsplans umfassen.

In verschiedenen Beispielen kann es möglich sein, dass die Optimierung und die Betriebsplanung in den Blöcken 1001 und 1002 rollierend durchgeführt wird, was in Fig. 3 durch die gestrichelte Linie indiziert ist.

Beim Durchführen der Optimierungen in Block 1001 kann es insbesondere möglich sein, eine Leistungsentnahme des Mikronetzes aus dem Hauptstromnetz in mindestens einem HLZ des Hauptstromnetzes zu berücksichtigen. So wäre es beispielsweise möglich, eine maximale Leistungsentnahme des Mikronetzes aus dem Hauptstromnetz in dem mindestens einen HLZ zu berücksichtigen, d.h. die Spitzenlastentnahme. Es könnte aber auch eine mittlere Leistungsentnahme berücksichtigt werden oder aber ein über die Zeitdauer des HLZ integrierter Wert für die Leistungsentnahme berücksichtigt werden.

Durch das Berücksichtigen der Leistungsentnahme in dem mindestens einen HLZ kann die positive oder negative Qualifikation für die atypische Netznutzung abgebildet werden. Insbesondere könnte eine Vergütung für die entsprechende Unterstützung des Betriebs des Hauptstromnetzes durch eine Reduktion der Leistungsentnahme des Mikronetzes aus dem Hauptstromnetz in den mindestens einen HLZ abgebildet werden. Details im Zusammenhang mit dem HLZ sind im Zusammenhang mit der Fig. 4 illustriert.

Fig. 4 illustriert Aspekte im Zusammenhang mit HLZs 301, 302. Fig. 4 illustriert insbesondere eine Leistungsentnahme 201 des Mikronetzes 100 aus dem Hauptstromnetz 120 als Funktion der Zeit, hier über den Verlauf eines Tages. Der dargestellte Zeitraum entspricht dem Planungsintervall 602 einer Optimierung, die zum Zeitpunkt 601 prädiktiv durchgeführt wird.

Z.B. ist aus Fig. 4 ersichtlich, dass das HLZ 301 im Zeitraum 10:00 Uhr bis 13:00 Uhr definiert ist; und das HLZ 302 im Zeitraum 17:00 Uhr bis 19:00 Uhr definiert ist. Diese Werte sind rein beispielhaft.

Die HLZs 301, 302 könnten in entsprechenden Steuerdaten definiert sein, die an das Gerät 500 übergeben werden.

Im Beispiel der Fig. 4 ist auch die maximale Leistungsentnahme 212 im gesamten Betriebszeitraum - beispielsweise im gesamten Verlauf des Jahres - dargestellt. Diese liegt bei ungefähr 460 kW.

In Fig. 4 ist auch die maximale Leistungsentnahme 211 während der HLZ 301, 302 im dargestellten Zeitraum dargestellt. Diese liegt bei etwa 270 kW.

In Fig. 4 ist auch ein Verhältnis 221 zwischen der maximalen Leistungsentnahme 211 und der maximalen Leistungsentnahme 212 dargestellt. Dieses Verhältnis 221 erfüllt eine Erheblichkeitsschwelle 222. Dies bedeutet, dass der Betrieb des Mikronetzes im Beispiel der Fig. 4 für die atypische Netznutzung qualifiziert ist.

Eine solche Möglichkeit der atypischen Netznutzung sollte bei der Lastenverteilung beim Betrieb von Mikronetzen berücksichtigt werden. Jedoch ist es mit herkömmlichen Techniken zur prädiktiven Betriebsplanung von Mikronetzen häufig nicht oder nur begrenzt möglich, die Qualifikation für die atypische Netznutzung zu implementieren. Dies liegt daran, dass herkömmliche Techniken oftmals auf ein Planungsintervall 602 von wenigen Stunden bis zu einem Tag beschränkt sind: Hierfür gibt es viele Gründe: Ein Tag ist die typische Zykluslänge für Batterieeinsatzplanung ("Wann muss ich die Batterie über den Tag laden und wann nutze ich diese Energie wieder, um z.B. Lastspitzen zu decken?"). Vorhersagen für die Verfügbarkeit von regenerativen Energiequellen und der benötigten Stromproduktion im Mikronetz werden aber für längere Planungsintervalle 602 unsicherer. Die Laufzeiten der Programme zur Betriebsplanung steigen mit der Länge des Planungsintervalls 602. MILPbasierte Steuerungstools werden rollierend neu gestartet und haben aufgrund der Betriebsplanung im laufenden Betrieb nur begrenzte Zeit um Ergebnisse zu liefern (manchmal wird ein Echtzeit-Betrieb gefordert).

Im Allgemeinen ist das Planungsintervall 602 von Programmen zur Betriebsplanung somit deutlich kleiner als der typische Betriebszeitraum, der typischerweise ein Jahr beträgt; z.B. um mindestens einen Faktor 10 oder mehr.

Dementsprechend entsteht die Problemstellung, die Qualifikation für die atypische Nutzung, welches sich typischerweise auch auf die (z.B. maximale) Leistungsentnahme aus dem Hauptstromnetz im gesamten laufenden Betriebszeitraum bezieht, in der rollierenden Optimierung mit dem kürzeren Zeithorizont des Planungsintervalls zu berücksichtigen.

Allgemein formuliert kann es also möglich sein, dass mehrere HLZ im Planungsintervall vorhanden sind, sowie in einem historischen Intervall, welches mindestens um einen Faktor 10 länger ist, als das Planungsintervall. Es ist also insbesondere möglich, das historische Intervall bei der Betriebsplanung zu berücksichtigen. Die Zielfunktion kann z.B. die Spitzenlastentnahme des Mikronetzes aus dem Hauptstromnetz außerhalb der mehreren HLZ im historischen Intervall und im Planungsintervall berücksichtigen.

Im Allgemeinen können ein oder mehrere Charakteristiken des Betriebs des Mikronetzes während des historischen Intervalls als Parameter im Zusammenhang mit der Optimierung berücksichtigt werden. Da die Optimierung zu einem Zeitpunkt nach Ende des historischen Intervalls durchgeführt wird, sind die Werte dieser Parameter zum Zeitpunkt des Durchführens der Optimierung fest - es kann dann aber zu einer Aktualisierung der Werte der Parameter vor dem Durchführen der nächsten Iteration der Optimierung erfolgen.

Das historische Intervall kann z.B. dem Betriebszeitraum entsprechen, über welchen die Qualifikation für die atypische Netznutzung bestimmt wird.

Nachfolgend wird eine beispielhafte Implementierung im Detail diskutiert. Hierbei wird eine gemischt-ganzzahlige lineare und zeitdiskrete Optimierung durchgeführt. Dazu wird das Planungsintervall 602, [0,T] der Optimierung, typischerweise 24 Stunden, in einzelne Zeitintervalle $t_n$ mit $n \in \{1 \ldots N\}$, mit $t_0 = 0$ und $t_N = T$ eingeteilt. Es wird definiert:

Parameter:

| | |
|---|---|
| $t_n$: | Beginn des Zeitintervalls n |
| $\Delta t_n$: | Länge des Zeitintervalls n |
| $P_{Peak,His}$: | Maximale Leistungsentnahme (englisch Peak) aus dem Hauptstromnetz im historischen Intervall innerhalb und außerhalb von Hauptlastzeitfenstern normiert auf [O,1] |
| $\hat{P}_{Peak,His}$: | Maximale Leistungsentnahme in HLZs im historischen Intervall, normiert auf [O,1] |
| $Id_{HD}(t_n)$: | Indikatorparameter, welcher anzeigt, ob im Zeitintervall n ein HLZ aktiv ist |
| $P_{ExPeak}$: | Erwartete maximale Leistungsentnahme aus dem Netz, normiert auf [O,1] |
| $\Delta P_{Peak}$: | Erheblichkeitsschwelle in % |
| $C_p$: | Kosten pro kWp maximale Leistungsentnahme aus dem Netz in €/kWp |

Variablen:

| | |
|---|---|
| $P(t_n)$: | Leistungsentnahme aus dem Hauptstromnetz im Zeitintervall n (Steuerungsvariable), normiert auf [O,1] |
| $P_{Peak}$: | Maximale Leistungsentnahme aus dem Hauptstromnetz im historischen Intervall und Planungsintervall, normiert auf [O,1] |
| $\hat{P}_{Peak}$: | Maximale Leistungsentnahme in HLZs aus dem Hauptstromnetz im historischen Intervall und Planungsintervall, normiert auf [O,1] |
| $Id_{Atyp}$: | Indikatorvariable: Liegt atypische Netznutzung vor? 1, falls $\hat{P}_{Peak} \geq (1- \Delta P_{Peak}/100) * P_{Peak}$ , sonst 0 |
| $Id_{Peak,His}$: | Indikatorvariable: Ist die maximale Leistungsentnahme in allen Zeitschritten des aktuellen Planungsintervalls kleiner als im historischen Intervall? 1, falls $P_{Peak,His} = \max_{k=l,\cdots,n} [P(t_k),P_{Peak,His}]$, sonst 0 |
| $Id_{Peak}(t_n)$: | Indikatorvariable: Ist die maximale Leistungsentnahme im Zeitintervall n des Planungsintervalls größer als im historischen Intervall und allen anderen Zeitintervallen k? 1, falls $P(t_n) = \max_{k=l,\cdots,n} [P(t_k),P_{Peak,His}]$, sonst 0 |
| $P_{Viol}$: | $P_{Peak} - \hat{P}_{Peak}$, *falls* $Id_{Atyp} = 0$, *sonst 0* |

Mithilfe dieser Parameter und Variablen wird ein gemischtganzzahliges lineares Optimierungsprogramm (P) formuliert, um das Verhalten des Mikronetzes zu modellieren und die Kosten für die Leistungsspitze der Stromentnahme aus dem Hauptstromnetz zu minimieren:

$$(1)\min_p c_p * (\hat{P}_{peak} + P_{viol}) \qquad \text{(Zielfunktion)}$$
$$(2)\ P_{Viol} \geq P_{Peak} - \hat{P}_{Peak} - Id_{Atyp} \qquad \text{(Leistungsüberschreitung)}$$
$$(3)\ Id_{Atyp} \leq 1-(\hat{P}_{Peak}-(1-\Delta P_{Peak}/100)*P_{Peak}) \qquad \text{(Qualifikation atypische Nutzung)}$$
$$(4)\ Id_{Peak,His} + \sum_n^N Id_{Peak}(t_n) = 1 \qquad \text{(Auswahl Zeitfenster P-Spitze)}$$
$$(5a)\ P_{Peak} \geq P(t_n) \qquad \text{(Untere Schranke Leistungsspitze)}$$
$$(5b)\ P_{Peak} \geq P_{Peak,His} \qquad \text{(Untere Schranke Leistungsspitze)}$$
$$(5c)\ P_{Peak} \leq P(t_n)+(1-Id_{Peak}(t_n)) \qquad \text{(Obere Schranke Leistungsspitze)}$$
$$(5d)\ P_{Peak} \leq P_{Peak,His}+(1-Id_{Peak,His}) \qquad \text{(Obere Schranke Leistungsspitze)}$$
$$(6a)\ \hat{P}_{Peak} \geq P(t_n),\text{falls } Id_{HD}(t_n)=1 \qquad \text{(Untere Schranke Leistungsspitze HLZ)}$$
$$(6b)\ \hat{P}_{Peak} \geq \hat{P}_{Peak,His} \qquad \text{(Untere Schranke Leistungsspitze HLZ)}$$

Mittels Gl. (3) kann also festgestellt werden, ob atypische Netznutzung vorliegt. Mittels der Indikatorvariablen $Id_{Atyp}$ wird dann in der Zielfunktion gemäß Gl. (1) eine Fallunterscheidung vorgenommen.

Dieses Optimierungsprogramm wird über die Leistungspunkte $P(t_n)$ des Anschlusses an das Hauptstromnetz gesteuert. Das Zielfunktional (1) ist die Summe der entstehenden Kosten für die maximale Leistungsentnahme aus dem Hauptstromnetz und soll minimiert werden.

Die Randbedingung (2) beschreibt die Differenz der maximalen Leistungsentnahme aus dem Hauptstromnetz und der maximalen Leistungsentnahme aus dem Hauptstromnetz in den HLZs, für den Fall, dass man sich nicht für die atypische Netznutzung qualifiziert. Dies wird durch die Subtraktion der Indikatorvariable $Id_{Atyp}$ erreicht: Ist $Id_{Atyp} = 1$, d.h. das Mikronetz ist für atypische Netznutzung qualifiziert, so kann $P_{Viol} = 0$ gesetzt werden und die Zielfunktion wird nur auf Basis der Leistungsspitze im HLZ $\hat{P}_{Peak}$ berechnet. Ist $Id_{Atyp} = 0$, d.h. das Mikronetz ist nicht für atypische Netznutzung qualifiziert, so muss $P_{Viol} = P_{Peak} - \hat{P}_{Peak}$ sein und die Zielfunktion wird auf Basis der Leistungsspitze $P_{Peak}$ berechnet. Es sind aber auch andere Formulierungen für die Zielfunktion möglich.

Die Qualifikation für die atypische Netznutzung wird mithilfe der Ungleichung (3) beschrieben. Falls der Abstand zwischen $P_{Peak}$ und $\hat{P}_{Peak}$ größer gleich der Erheblichkeitsschwelle $\Delta P_{Peak}$ ist, so ist $Id_{Atyp} = 1$, sonst $Id_{Atyp} = 0$.

Gleichung (4) sorgt für die Auswahl des Zeitschrittes, in dem die maximale Leistungsentnahme auftritt. Dies wird mittels einer SOS-1 Randbedingung auf Indikatorvariablen realisiert.

Die Randbedingungen (5a) - (5d) sorgen dafür, dass die maximale Leistungsentnahme $P_{Peak}$ entsprechend der Leistungsentnahmen $P(t_n)$ im aktuellen Vorschauhorizont bzw. Planungsintervall und im historischen Intervall berechnet wird. Die Ungleichungen (6a) und (6b) liefern untere Schranken für die maximale Leistungsentnahme $\hat{P}_{Peak}$ in HLZs des aktuellen Vorschauhorizonts und des historischen Intervalls.

Nach jedem Aufruf der Optimierung wird die maximale Leistungsentnahme aus dem Netz im historischen Intervall $P_{Peak,His}$ und in den HLZs $\hat{P}_{Peak,His}$ entsprechend der tatsächlichen Leistungsentnahmen im laufenden Vorschauhorizont aktualisiert. Das bedeutet, dass die entsprechenden Werte in Abhängigkeit von der entsprechenden Betriebsplanung aktualisiert werden.

Es kann vorkommen, dass noch keine Information über das historische Intervall verfügbar ist. Das kann z.B. dann der Fall sein, wenn das historische Intervall initialisiert wird. Das kann der Fall sein, wenn der Betriebszeitraum beginnt (etwa zu Beginn eines Jahres).

Zu Beginn des historischen Intervalls kann also die maximale Leistungsentnahme mit der erwarteten/angenommenen maximalen Leistungsentnahme initialisiert werden:

$$P_{Peak,His} = P_{ExPeak} \text{ und } \hat{P}_{Peak,His} = P_{ExPeak} * (1 - \Delta P_{Peak}/100).$$

In dieser Situation ist nämlich keine Information über das historische Intervall verfügbar. Deshalb wird eine plausible Annahme für die marginale Leistungsentnahme in der Hauptlastzeitfenster - und optional auch außerhalb der Hauptlastzeitfenster - verwendet, um einem erratischen Ergebnis der Optimierung vorzubeugen.

In manchen Anwendungen wird statt einmaliger Tagesplanungen eine rollierende Betriebsplanung mit regelmäßiger Re-Optimierung durchgeführt werden. Dies wird durch die voranstehend beschriebenen Techniken unterstützt (Verschiebung des Planungsintervalls und Übergabe des aktuellen Systemzustandes, z.B. der bisherigen Leistungsspitzen innerhalb und außerhalb der HLZ im historischen Intervall). Dies bedeutet in anderen Worten, dass es für jede Iteration mit Durchführen der Optimierung möglich ist, einen Wert für die weitere maximale Leistungsentnahme (außerhalb der HLZ im historischen Intervall) aus einer entsprechend vorgehaltenen Variable durchzuführen und dann diesen Wert in Abhängigkeit von der Betriebsplanung, d.h. nach Festlegen der maximalen Leistungsentnahme auch im jeweiligen Planungsintervall, zu aktualisieren. Wird z.B. eine höhere weitere maximale Leistungsentnahme außerhalb der HLZ im aktuellen Planungsintervall umgesetzt (im Vergleich zur bisherigen maximalen Leistungsentnahme im historischen Intervall), so kann der Wert der entsprechenden Variablen angepasst werden.

Im Zusammenhang mit den Gleichungen (1) - (4) wird noch Folgendes angemerkt: Die Indikatorvariable $Id_{Atyp}$ beschreibt, ob eine Qualifikation für die atypische Netznutzung vorliegt oder nicht. Im Rahmen der Optimierung kann die maximale Leistungsentnahme innerhalb der HLZs und/oder die maximale Leistungsentnahme außerhalb der HLZs angepasst werden, um den Wert für diese Indikatorvariable - bzw. die Qualifikation für die atypische Netznutzung - zu verändern. Wurde z.B. in ein oder mehreren HLZs im historischen Intervall eine vergleichsweise große maximale Leistungsentnahme oberhalb der Erheblichkeitsschwelle implementiert, so kann dies bedeuten, dass auch eine besonders geringe maximale Leistungsentnahme in ein oder mehreren HLZs im Planungsintervall keine erneute Qualifikation für die atypische Netznutzung ermöglichen kann. Dann kann es keinen besonderen Anreiz geben, um die Leistungsentnahme in den HLZs zu beschränken. Andererseits könnte es sein, dass durch eine kurzfristige Erhöhung der maximalen Leistungsentnahme außerhalb der HLZ im Planungsintervall eine erneute Requalifikation für die atypische Netznutzung erzielt werden kann. Solches und weiteres Verhalten kann durch das Berücksichtigen der Fallunterscheidung in der Zielfunktion zwischen Qualifikation für den atypische Netzbetrieb und keine Qualifikation für den atypischen Betrieb - modelliert durch die Indikatorvariable - abgebildet werden.

Aus Gleichung (1) ist ersichtlich, dass die Zielfunktion im Fall der Qualifikation für den atypischen Netzbetrieb einen vorgegebenen Bonus aufweisen kann, nämlich z.B. die reine Berechnung im Zusammenhang mit der Leistungsspitze in den ein oder mehreren HLZs im historischen Intervall und im Planungsintervall (typischerweise ein vergleichsweise geringer Wert); während im Fall ohne Qualifikation für den atypische Netzbetrieb die Zielfunktion auf Grundlage der Leistungsspitze im gesamten historischen Intervall und im Planungsintervall außerhalb der HLZ bestimmt wird (typischerweise ein vergleichsweise großer Wert)

Dabei sollte grundsätzlich verstanden werden, dass die auch in Gleichung (1) formulierte Zielfunktion nur der Teil einer insgesamt berücksichtigten Zielfunktion sein kann. Typischerweise können noch viele andere Zielvorgaben im Zusammenhang mit der Zielfunktion berücksichtigt werden, etwa Verschleiß, An/Abschaltposten, etc. Die obenstehend formulierte Zielfunktion bzw. die Parameter und Variablen können aber einfach in bestehende Ansätze zur Optimierung bzw. zur Betriebsplanung integriert werden, wie sie z.B. in "Optimal Operational Planning for PV-Wind-Diesel-Battery Microgrid, G. G. Moshi, C. Bovo, and A. Berizzi, IEEE Eindhoven PowerTech, 2015 beschrieben sind.

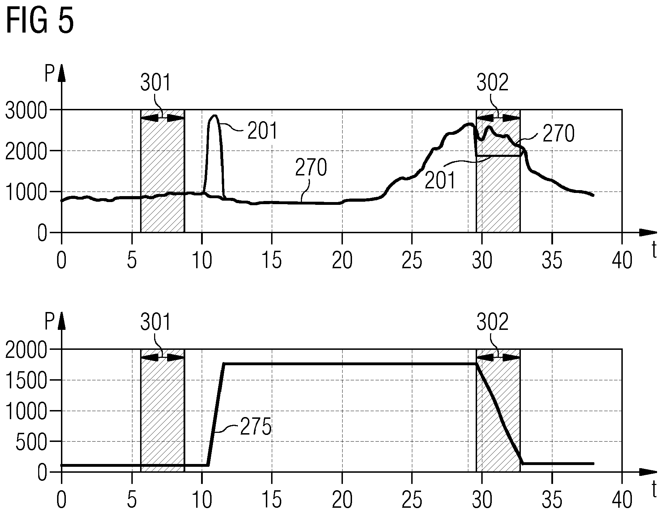

Fig. 5 illustriert Aspekte im Zusammenhang mit der prädiktiven Betriebsplanung von Mikronetzen unter Berücksichtigung von HLZs eines Hauptstromnetzes. Insbesondere illustriert Fig. 5 die Leistungsentnahme 201 des Mikronetzes aus dem Hauptstromnetz 120 über den Anschluss 110 als Funktion der Zeit. In dem Beispiel der Fig. 5 wurde die die Leistungsentnahme 201 bestimmende Betriebsplanung unter Anwendungen von Techniken, wie sie voranstehend beschrieben wurden, durchgeführt. Dabei wird im Beispiel der Fig. 5 ein vereinfachtes Mikronetz 100, welches einen Anschluss an ein Hauptstromnetz 120, eine Last und eine Batterie umfasst, betrachtet. Es sind zwei HLZs 301, 302 im Zusammenhang mit dem Hauptstromnetz 120 definiert. Das Planungsintervall 602 weist eine Länge von 24 Stunden. Deshalb wird im Zusammenhang mit der Optimierung das HLZ 302 ab ca. 10:00 Uhr berücksichtigt: Das HLZ 302 erstreckt sich im Zeitraum von 30 Stunden bis 33 Stunden.

Aus Fig. 5 ist ersichtlich, dass die Optimierung eine Betriebsplanung bewirkt, bei der die Leistungsentnahme 201 aus dem Hauptstromnetz 120 während des HLZs 302 reduziert wird: Der Leistungsverbrauch 270 der Last wird auch teilweise durch Entnahme der entsprechenden Leistung aus der Batterie gespeist. Der Leistungsverbrauch 270 der Last ist im HLZ 302 insbesondere größer als die Leistungsentnahme 201 aus dem Hauptstromnetz 120. Dementsprechend wird die Batterie vorausschauend geladen (im Zeitraum von ca. 10:00 Uhr bis ca. 11:00 Uhr, sh. Fig. 5, unten, wo der Ladezustand 275 illustriert ist), um die Spitze der Leistungsentnahme 201 aus dem Hauptstromnetz 120 im HLZ 302 zu minimieren. Dadurch kann eine Qualifikation für die atypische Netznutzung erreicht werden.

Zusammenfassend wurden voranstehend Techniken für die Berücksichtigung von atypischer Netznutzung im Zusammenhang mit HLZs in Programme zur Durchführung einer ganzzahligen linearen Optimierung im Zusammenhang mit der vorausschauenden, rollierenden Steuerung von Mikronetzen gezeigt. Ein flexibler Ansatz ermöglicht es, die atypische Netznutzung in verschiedenen Mikronetzen unterschiedlicher Betreiber mit einem einheitlichen Satz von Parametern zu konfigurieren. Insbesondere wurden Techniken beschrieben, welche sich einfach in gemischt-ganzzahlige lineare Optimierungen gemäß Referenzimplementierung integrieren lassen.

Die hierin beschriebenen Techniken weisen die folgenden Vorteile auf:

Einfachheit: Die Berücksichtigung der atypischen Netznutzung lässt sich leicht in herkömmliche Programme mit einer prädiktiven ganzzahligen linearen Optimierung integrieren.

Dadurch wird eine prädiktive, rollierende Steuerung von Mikronetzen möglich.

Effizienzsteigerung: Die Berücksichtigung von atypischer Netznutzung ermöglicht es, die Betriebskosten von Mikronetzen zu minimieren.

Flexibilität: Mit dem geschilderten Ansatz kann die atypische Netznutzung in verschiedenen Mikronetzen unterschiedlicher Betreiber mit einem einheitlichen Satz von Parametern konfiguriert und genutzt werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend Techniken beschrieben, bei denen die Qualifikation für die atypische Netznutzung in Abhängigkeit von einem Verhältnis zwischen einer maximalen Leistungsentnahme in ein oder mehreren HLZs zu einer maximalen Leistungsentnahme außerhalb der ein oder mehreren HLZ in einem historischen Intervall und in einem Planungsintervall abhängt. Entsprechende Parameterwerte für das historische Intervall können kontinuierlich aktualisiert werden. In anderen Beispielen könnte die Qualifikation für die atypische Netznutzung von anderen oder weiteren Kriterien abhängen. Beispielsweise könnte anstatt einer maximalen Leistungsentnahme innerhalb der HLZ und/oder außerhalb der HLZ auch eine mittlere Leistungsentnahme innerhalb der HLZ und/oder außerhalb der HLZ berücksichtigt werden, oder eine integrierte Leistungsentnahme.

Ferner wurden voranstehend Techniken beschrieben, bei denen eine Vergütung bei Qualifikation für den atypischen Netzbetrieb von der maximalen Leistungsentnahme innerhalb eines HLZs abhängt. In anderen Beispielen könnte die Vergütung der Qualifikation für den atypischen Netzbetrieb auch anderweitig ausgebildet sein. Beispielsweise könnte der mittlere Stromverbrauch innerhalb der HLZs maßgeblich für die Vergütung im Zusammenhang der Qualifikation für die atypische Netznutzung sein.

Außerdem wurden voranstehend Techniken beschrieben, bei denen die Qualifikation für die atypische Netznutzung im Zusammenhang mit einer gemischt-ganzzahligen linearen Optimierung berücksichtigt wurde. In anderen Beispielen könnten auch andere Techniken der Optimierung berücksichtigt werden, z.B. gemischt-ganzzahlige quadratische Optimierungen oder auch nicht-ganzzahlige Optimierungen.

Weiterhin wurden verschiedene Beispiele beschrieben, bei denen eine mittlere oder maximale Leistungsentnahme aus dem Hauptstromnetz während HLZs im Rahmen der Optimierung berücksichtigt wird. In manchen Beispielen könnte außerdem eine Leistungsabgabe vom Mikronetz an das Hauptstromnetz berücksichtigt werden.

**Patentansprüche**

1. Verfahren zur prädiktiven Betriebsplanung in einem Mikronetz (100) mit Anschluss (110) an ein Hauptstromnetz (120),

   wobei der Betrieb des Hauptstromnetzes durch das Mikronetz durch Berücksichtigung von Hochlastzeitfenstern unterstützt wird, und wobei eine Reduktion der Leistungsentnahme des Mikronetzes aus dem Hauptstromnetz in den Hochlastzeitfenstern erfolgt,
   wobei das Verfahren umfasst:

   - Durchführen einer Optimierung einer Zielfunktion für ein Planungsintervall (602), wobei die Zielfunktion eine Leistungsentnahme (211) des Mikronetzes (100) aus dem Hauptstromnetz (120) in mindestens einem solchen Hochlastzeitfenster (301, 302) des Hauptstromnetzes (120) berücksichtigt,

   wobei das mindestens eine Hochlastzeitfenster (301, 302) mehrere Hochlastzeitfenster (301, 302) umfasst,

   wobei die mehreren Hochlastzeitfenster (301, 302) im Planungsintervall (602) und in einem historischen Intervall, das mindestens um einen Faktor 10 länger ist, als das Planungsintervall (602), angeordnet sind, und
   wobei die Zielfunktion eine weitere Leistungsentnahme (212) des Mikronetzes (100) aus dem Hauptstromnetz (120) außerhalb der mehreren Hochlastzeitfenster (301, 302) im historischen Intervall und im Planungsintervall (602) berücksichtigt, und
   - Durchführen der Betriebsplanung basierend auf einem Ergebnis der Optimierung.

2. Verfahren nach Anspruch 1, das weiterhin umfasst:

   - Laden mindestens eines Werts für die Leistungsentnahme und/oder die weitere Leistungsentnahme (212) aus einer Variable im Zusammenhang mit dem Durchführen der Optimierung, und
   - Aktualisieren des mindestens einen Werts in Abhängigkeit von der Betriebsplanung.

3. Verfahren nach Anspruch 1 oder 2,

   wobei die Zielfunktion eine Fallunterscheidung berücksichtigt zwischen (i) Qualifikation für eine atypische Netznutzung und (ii) keine Qualifikation für die atypische Netznutzung,
   wobei die Fallunterscheidung getroffen wird in Abhängigkeit von einem Verhältnis der Leistungsentnahme und der weiteren Leistungsentnahme.

4. Verfahren nach Anspruch 3,

   wobei die Zielfunktion im Fall (i) Qualifikation für die atypische Netznutzung einen vorgegebenen Bonus aufweist,
   wobei die Zielfunktion im Fall (ii) keine Qualifikation für die atypische Netznutzung den vorgegebenen Bonus nicht aufweist.

5. Verfahren nach einem der Ansprüche 2 bis 4, das weiterhin umfasst:

   - sofern keine Information über das historische Intervall verfügbar ist: Verwenden einer Annahme für die maximale Leistungsentnahme des Mikronetzes (100) aus dem Hauptstromnetz (120) in den mehreren Hochlastzeitfenster (301, 302).

6. Verfahren nach einem der voranstehenden Ansprüche,
   wobei die Optimierung als gemischt-ganzzahlige lineare Optimierung durchgeführt wird.

7. Gerät mit einem Prozessor, der dazu eingerichtet ist, um das Verfahren nach einem der Ansprüche 1 bis 6 auszuführen.

## Claims

1. Method for predictive operational planning in a microgrid (100) having a connection (110) to a main electricity grid (120),

   wherein the operation of the main electricity grid is supported by the microgrid by taking into account high-load time windows, and wherein the power draw of the microgrid from the main electricity grid is reduced in the high-load time windows,
   wherein the method comprises:

   - optimizing a target function for a planning interval (602), wherein the target function takes into account a power draw (211) of the microgrid (100) from the main electricity grid (120) in at least one such high-load time window (301, 302) of the main electricity grid (120),

   wherein the at least one high-load time window (301, 302) comprises a plurality of high-load time windows (301, 302),

   wherein the plurality of high-load time windows (301, 302) are arranged in the planning interval (602) and in a historical interval that is longer than the planning interval (602) by at least a factor of 10, and
   wherein the target function takes into account a further power draw (212) of the microgrid (100) from the main electricity grid (120) outside of the plurality of high-load time windows (301, 302) in the historical interval and in the planning interval (602), and
   - performing the operational planning based on a result of the optimization.

2. Method according to Claim 1, furthermore comprising:

   - loading at least one value for the power draw and/or the further power draw (212) from a variable in connection with performing the optimization, and
   - updating the at least one value depending on the operational planning.

3. Method according to Claim 1 or 2,

   wherein the target function takes into account a case differentiation between (i) qualifying for atypical grid use and (ii) not qualifying for atypical grid use,
   wherein the case differentiation is made depending on a ratio of the power draw and the further power draw.

4. Method according to Claim 3,

   wherein the target function has a predefined bonus in the case (i) of qualifying for atypical grid use,
   wherein the target function does not have the predefined bonus in the case (ii) of not qualifying for atypical grid use.

5. Method according to one of Claims 2 to 4, furthermore comprising:

   - if no information is available about the historical interval: using an assumption for the maximum power draw of the microgrid (100) from the main electricity grid (120) in the plurality of high-load time windows (301, 302).

6. Method according to one of the preceding claims,
   wherein the optimization is performed as a mixed-integer linear optimization.

7. Device having a processor that is configured so as to execute the method according to one of Claims 1 to 6.

## Revendications

1. Procédé de planification de fonctionnement prédictive dans un micro-réseau (100) avec raccordement (110) à un réseau électrique principal (120),

   le fonctionnement du réseau électrique principal étant soutenu par le micro-réseau en fonction des fenêtres temporelles de charge élevée, et la consommation d'énergie du micro-réseau à partir du réseau électrique principal est réduite dans les fenêtres temporelles de charge élevée,
le procédé consistant à :

- réaliser une optimisation d'une fonction cible pour un intervalle de planification (602), la fonction cible prenant en compte une consommation d'énergie (211) du micro-réseau (100) à partir du réseau électrique principal (120) dans au moins une telle fenêtre temporelle de charge élevée (301, 302) du réseau électrique principal (120),

l'au moins une fenêtre temporelle de charge élevée (301, 302) comprenant une pluralité de fenêtres temporelles de charge élevée (301, 302),

la pluralité de fenêtres temporelles de charge élevée (301, 302) étant disposées dans l'intervalle de planification (602) et dans un intervalle historique qui est au moins 10 fois plus long que l'intervalle de planification (602), et
la fonction cible prenant en compte une consommation d'énergie supplémentaire (212) du micro-réseau (100) à partir du réseau électrique principal (120) en dehors de la pluralité de fenêtres temporelles de charge élevée (301, 302) dans l'intervalle historique et dans l'intervalle de planification (602), et
- réaliser la planification de fonctionnement sur la base d'un résultat de l'optimisation.

2. Procédé selon la revendication 1, consistant en outre à :

- charger au moins une valeur pour la consommation d'énergie et/ou la consommation d'énergie supplémentaire (212) à partir d'une variable en rapport avec la réalisation de l'optimisation, et
- mettre à jour l'au moins une valeur en fonction de la planification de fonctionnement.

3. Procédé selon la revendication 1 ou 2,

dans lequel la fonction cible prend en compte une distinction de cas entre une (i) qualification pour un usage atypique du réseau et (ii) l'absence de qualification pour un usage atypique du réseau,
la distinction de cas étant effectuée en fonction d'un rapport entre la consommation d'énergie et la consommation d'énergie supplémentaire.

4. Procédé selon la revendication 3,

la fonction cible dans le cas (i) d'une qualification pour l'usage atypique du réseau présentant un bonus prédéterminé,
la fonction cible dans le cas (ii) d'une absence de qualification pour l'usage atypique du réseau ne présentant pas le bonus prédéterminé.

5. Procédé selon l'une des revendications 2 à 4, consistant en outre à :

- si aucune information sur l'intervalle historique n'est disponible : utiliser une hypothèse pour la consommation électrique maximale du micro-réseau (100) à partir du réseau électrique principal (120) dans la pluralité de fenêtres temporelles de charge élevée (301, 302).

6. Procédé selon l'une des revendications précédentes,
dans lequel l'optimisation est effectuée comme une optimisation linéaire en nombres entiers mixtes.

7. Dispositif doté d'un processeur, conçu pour mettre en œuvre le procédé selon l'une des revendications 1 à 6.

# FIG 1

# FIG 2

## FIG 3

## FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **RAFIEE SANDGANI MOHSEN et al.** Energy Management in a Network of Grid-Connected Microgrids/Nanogrids Using Compromise Programming. *IEEE TRANSACTIONS ON SMART GRID,* 01. Mai 2018, vol. 9 (3), 2180-2191

- **GAZIJAHANI FARHAD SAMADI et al.** Reliability constrained two-stage optimization of multiple renewable-based microgrids incorporating critical energy peak pricing demand response program using robust optimization approach. *ENERGY,* 01. August 2018, vol. 161, 999-1015
- **G. G. MOSHI ; C. BOVO ; A. BERIZZI.** Optimal Operational Planning for PV-Wind-Diesel-Battery Microgrid. *IEEE Eindhoven PowerTech,* 2015